**Europäisches Patentamt**

**European Patent Office**

**Office européen des brevets**

(19)

(11) Veröffentlichungsnummer : **0 339 213 B1**

(12)

# EUROPÄISCHE PATENTSCHRIFT

(45) Veröffentlichungstag der Patentschrift :
05.08.92 Patentblatt 92/32

(51) Int. Cl.$^5$ : **A01D 41/12, A01F 12/44**

(21) Anmeldenummer : **89103811.9**

(22) Anmeldetag : **04.03.89**

(54) **Mähdrescher.**

(30) Priorität : **26.04.88 DE 3814036**

(43) Veröffentlichungstag der Anmeldung :
**02.11.89 Patentblatt 89/44**

(45) Bekanntmachung des Hinweises auf die
Patenterteilung :
**05.08.92 Patentblatt 92/32**

(84) Benannte Vertragsstaaten :
**BE DE FR GB IT**

(56) Entgegenhaltungen :
FR-A- 1 493 191
GB-A- 1 101 431
GB-A- 1 311 710
GB-A- 2 090 715

(73) Patentinhaber : **FIRMA CLAAS OHG**
**Münsterstrasse 33**
**W-4834 Harsewinkel (DE)**

(72) Erfinder : **Kersting, Hermann**
**Oststrasse 11**
**W-4740 Oelde-Lette (DE)**

## Beschreibung

Die Erfindung betrifft einen Mähdrescher, bestehend aus einem Fahrgestell, einem Gehäuse, einem im Tangentialfluß arbeitenden, aus Dreschtrommel und -Korb gebildeten Dreschorgan, weiter bestehend aus an das Dreschorgan anschließenden Strohschüttlern mit darunter angeordnetem Rücklaufboden und einer Siebeinrichtung, wobei den Strohschüttlern eine im Mähdreschergehäuse gelagerte, an sich bekannte, im Axialfluß arbeitende und aus Rotor und Gehäuse bestehende Dresch- und Trenneinrichtung nachgeordnet ist.

Derartige aus der Praxis bekannte Mähdrescher arbeiten an sich zufriedenstellend. Praktische Versuche haben aber gezeigt, daß unter bestimmten Voraussetzungen (beispielsweise bei sehr feuchtem Erntegut) die gleichmäßige Gutübergabe nicht immer gewährleistet ist und insbesondere in den Bereichen großer Mattendicke Restkörner verbleiben.

Der vorliegenden Erfindung liegt daher Aufgabe zugrunde, einen Mähdrescher der eingangs näher bezeichneten Art so auszubilden, daß einerseits die Strohmatte zwecks optimaler Restkornausscheidung vor dem Einlegen in die Dresch- und Trenneinrichtung auseinandergerissen und andererseits das Gut sicher an die Dresch- und Trenneinrichtung übergeben wird. Diese Aufgabe wird dadurch gelöst, daß mit dem ablaufseitigen Ende eines jeden Schüttlers ein Übergabeelement zwecks Übergabe des Erntegutes vom Schüttler an die Dresch- und Trenneinrichtung fest verbunden ist, wobei jedem Übergabeelement ein Überleitboden zugeordnet ist, welches aus mehreren parallel mit Abstand zueinander verlaufenden Blechen gebildet ist, die im Bereich ihrer dem Boden zugewandten Enden in im Überleitboden vorhandenen Schlitzen ständig geführt sind.

Weitere vorteilhafte Ausgestaltungen der Erfindung ergeben sich aus den Unteransprüchen.

Im folgenden soll die Erfindung anhand eines Ausführungsbeispieles und mehrerer dieses schematisch darstellender Figuren näher erläutert werden. Dabei zeigt:

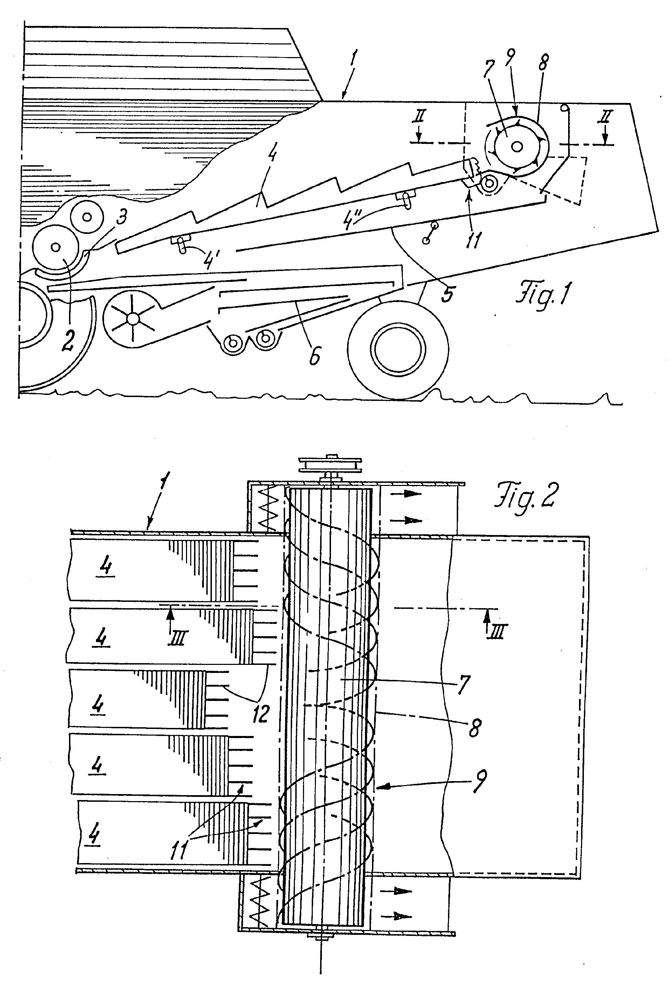

Figur 1 einen erfindungsgemäß aufgebauten Mähdrescher in Teilansicht in der Seitenansicht,

Figur 2 eine Ansicht gemäß der Linie II - II nach Figur 1,

Figur 3 eine Ansicht gemäß der Linie III - III nach Figur 2,

Figur 4 eine perspektivische Darstellung des erfindungswesentlichen Teiles und

Figur 5 den in Figur 4 dargestellten Teil in aufgelöster Darstellung.

Mit 1 ist das Gehäuse eines Mähdreschers bezeichnet, in dem in bekannter Weise ein im Tangentialfluß arbeitendes, aus Dreschtrommel 2 und Dreschkorb 3 gebildetes Dreschorgan, anschließenden Strohschüttler 4', ein Rücklaufboden 5 sowie eine Siebeinrichtung 6 angeordnet sind. Die Schüttler 4 sind auf Kurbelwellen 4', 4'' drehbar gelagert. Ihnen schließt sich eine an sich bekannte, aus Rotor 7 und Gehäuse 8 bestehende Dresch- und Trenneinrichtung 9 an. Die Strohschüttler 4 enden vor der Guteinlauföffnung 10 der Axial-, Dresch- und Trenneinrichtung 9. Dabei ist mit jedem Schüttlerende ein Übergabeelement 11 verschraubt, welches aus mehreren mit Abstand parallel zueinander verlaufenden Blechen 12 gebildet ist. Letztere sind an ihren der Dresch- und Trenneinrichtung 9 zugewandten Stirnseiten 13 bereichsweise verzahnt. Mittels einer Blechformplatte 14 sind, wie die Figur 5 zeigt, alle Bleche 12 eines Übergabeelementes 11 miteinander verbunden, beispielsweise durch Punktschweißung 15. Die Blechformplatte 14 selbst weist im Bereich ihrer unteren Kante Durchgangsbohrungen 16 auf, die in Deckung mit Bohrungen 17 gebracht werden, welche am Schüttlerboden 18 vorgesehen sind, so daß die Blechformplatte 14 mit dem Boden 18 über nicht dargestellte Schrauben verbunden werden kann. Da diese Verbindung allein nicht ausreicht, um ein Element 11 einwandfrei mit einem Schüttler 4 zu verbinden, ist eine weitere Verschraubung im hinteren Randbereich der Schüttlerabdeckung 20 erforderlich.

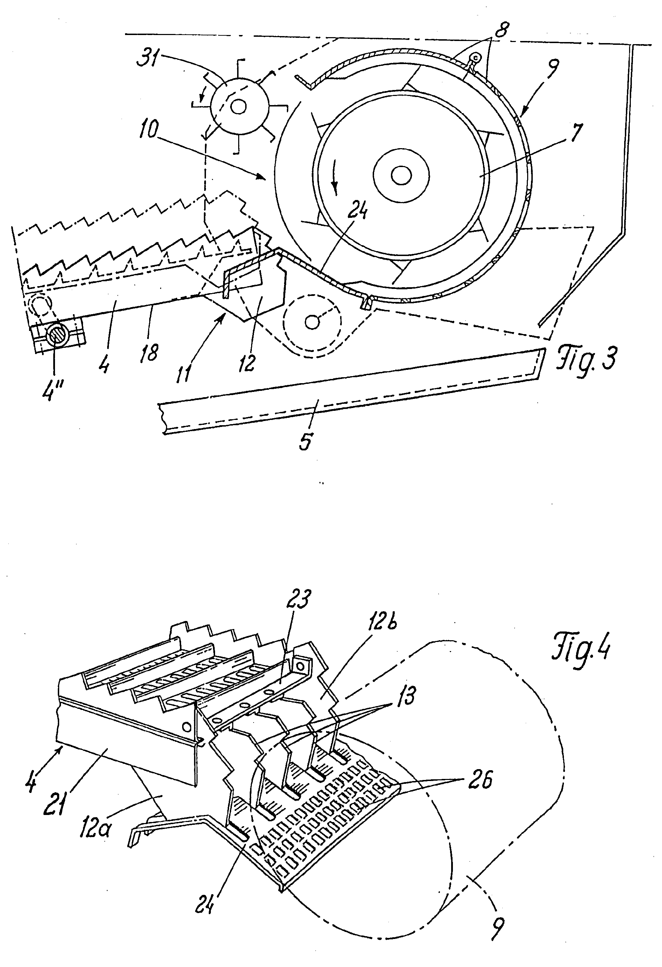

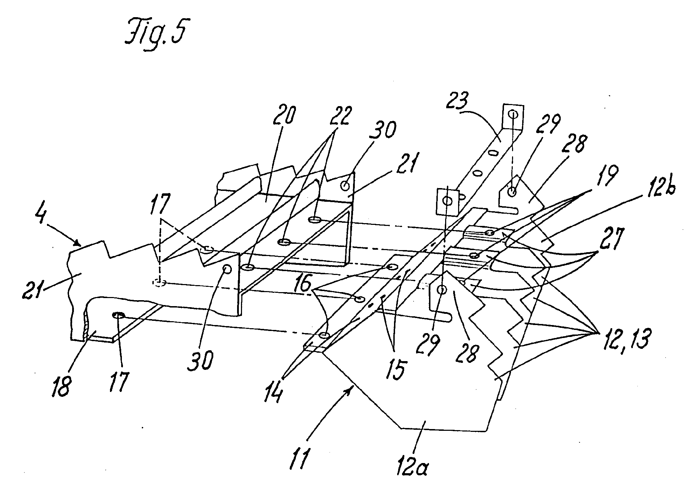

Hierzu decken sich die Lochungen 22 der Schüttlerabdeckung mit den Bohrungen 19 einzelner Bleche 12, deren obere Begrenzung bereichsweise abgewinkelte Anlageflächen 27 mit diesen Bohrungen 19 aufweisen. Die beiden äußeren Bleche 12 a und 12 b weisen Ansätze 28 auf, deren Lochungen 29 sich im montierten Zustand mit den Löchern 30 in den sich vertikal erstreckenden Schüttlerseitenwänden 21 decken. Als zusätzliche Querstabilisierung wird ein entsprechend gelochtes, an seinen Enden abgewinkeltes Bandeisen 23 in die Verschraubungen einbezogen. Aus den Figuren 3 und 4 ist zu erkennen, daß das Gehäuse 8 der Dresch- und Trenneinrichtung 9 im Bereich der Einlaßöffnung 10 ein Überleitboden 24 aufweist, der mit Schlitzen 25 versehen ist. Durch diese Schlitze 25 ragen die Bleche 12 aller Überleitungselemente 11 nach unten hin durch.

Auf diese Weise werden einerseits die Bleche 12 geführt und andererseits wird das Gut in Richtung der Dresch- und Trennvorrichtung abgestreift. Der Überleitboden 24 ist im Anschluß an die Schlitze 25 in Gutflußrichtung mit Durchgangslochungen 26 versehen, um bereits während der Gutübergabe eine Restkornabscheidung zu erreichen.

Versuche haben gezeigt, daß durch die zuvor beschriebenen Überleitelemente einerseits die über die Schüttler angeförderte Strohmatte aufgerissen wird und andererseits das Stroh durch die einzelnen Elemente zwangsweise an die Dresch- und Trenneinrichtung übergeben wird. Auf diese Weise findet eine zufriedenstellende Restkörnerausscheidung und eine staufreie Übergabe des Erntegutes statt.

Bezugszeichenaufstellung

1 - Gehäuse
2 - Dreschtrommel.
3 - Dreschkorb
4 - Strohschüttler
4' - Kurbelwelle
4" - Kurbelwelle
5 - Rücklaufboden
6 - Siebeinrichtung
7 - Rotor
8 - Gehäuse
9 - Dresch- und Trenneinrichtung
10 - Guteinlauföffnung
11 - Übergabeelement
12 - Blech
12a - Äußeres Blech
12b - Äußeres Blech
13 - Stirnseiten
14 - Blechformplatte
15 - Punktschweißung
16 - Durchgangsbohrungen
17 - Bohrungen
18 - Schüttlerboden
19 - Durchgangsbohrungen
20 - Schüttlerabdeckung
21 - Seitenwände
22 - Bohrungen
23 - Bandeisen
24 - Überleitboden
25 - Schlitze
26 - Durchgangslochungen
27 - Anlageflächen
28 - Ansätze
29 - Lochungen
30 - Löchern
31 - Einlegetrommel

**Patentansprüche**

1. Mähdrescher, bestehend aus einem Fahrgestell, einem Gehäuse (1), einem im Tangentialfluß arbeitenden, aus Dreschtrommel (2) und -Korb (3) gebildeten Dreschorgan, weiter bestehend aus an das Dreschorgan anschließenden Strohschüttlern (4) mit darunter angeordnetem Rücklaufboden (5) und einer Siebeinrichtung (6), wobei den Strohschüttlern (4) eine im Mähdreschergehäuse (1) gelagerte, an sich bekannte, im Axialfluß arbeitende und aus Rotor (7) und Gehäuse (8) bestehende Dresch- und Trenneinrichtung (9) nachgeordnet ist,
**dadurch gekennzeichnet,**
daß mit dem ablaufseitigen Ende eines jeden Schüttlers (4) ein Übergabeelement (11) zwecks Übergabe des Erntegutes vom Schüttler (4) an die Dresch- und Trenneinrichtung (9) fest verbunden ist, wobei jedem Übergabeelement (11) ein Überleitboden (24) zugeordnet ist, und daß jedes Übergabeelement (11) aus mehreren parallel mit Abstand zueinander verlaufenden Blechen (12) gebildet ist, die im Bereich ihrer dem Boden zugewandten Enden in, im Überleitboden (24) vorhandenen Schlitzen (25) ständig geführt sind.
2. Mähdrescher nach Anspruch 1
**dadurch gekennzeichnet,**
daß die Übergabeelemente (11) an ihren der Dresch- und Trenneinrichtung (9) zugewandten Stirnseiten (13) zumindest bereichsweise verzahnt ausgebildet sind.
3. Mähdrescher nach den Ansprüchen 1 und 2

**dadurch gekennzeichnet,**
daß der Überleitboden (24) übergangsfrei an das Gehäuse (8) angeschlossen und mit diesem verbunden ist.
4. Mähdrescher nach den Ansprüchen 1 bis 3
**dadurch gekennzeichnet,**
daß der Überleitboden (24) in seinem abgabseitigen Bereich in Flußrichtung gesehen hinter den Führungsschlitzen (25) gelocht ist.
5. Mähdrescher nach den Ansprüchen 1 bis 4
**dadurch gekennzeichnet,**
daß die Bleche (12) durch einen mit einem Schüttler (4) verschraubbaren Halter (14) miteinander verbunden sind.
6. Mähdrescher nach den Ansprüchen 1 bis 5
**dadurch gekennzeichnet,**
daß die Bleche (12) in ihrem Ausmaß die Bauhöhe des zugehörigen Schüttlers (4) nach unten wesentlich überschreiten.
7. Mähdrescher nach den Ansprüchen 1 bis 6,
**dadurch gekennzeichnet,**
daß die Bleche (12) zwecks Befestigung am Schüttler (4) Durchgangsbohrungen (16) aufweisen, die mit am Schüttler (4) vorgesehenen Bohrungen oder Löchern (22, 30) fluchten.
8. Mähdrescher nach den Ansprüchen 1 bis 7
**dadurch gekennzeichnet,**
daß dem Übergabeelement (11) eine oberhalb des abgabeseitigen Endes der Schüttler (4) vorgesehene der Dresch- und Trennvorrichtung (9) vorgelagerte Einlegetrommel (31) zugeordnet ist. (Fig. 3)

**Claims**

1. A combine harvester comprising a chassis, a housing (1), a threshing member which operates in the tangential flow mode and which is formed from a threshing drum (2) and a concave (3), further comprising straw walkers (4) adjoining the threshing member, with a return bottom (5) arranged therebeneath, and a sifting means (6), wherein arranged downstream of the straw walkers (4) is a per se known threshing and separating arrangement (9) which is mounted in the combine harvester housing (1) and which operates in the axial flow mode and which comprises a rotor (7) and a housing (8),
**characterised in that**
a transfer element (11) is fixedly connected to the discharge end of each walker (4) for the purposes of transfer of the crop material from the walker (4) to the threshing and separating arrangement (9), wherein associated with each transfer element (11) is a transfer guide plate member (24), and that each transfer element (11) is formed from a plurality of plate members (12) which extend parallel and at a spacing from each other and which are constantly guided in the region of their ends towards the ground in slots (25) in the transfer guide plate member (24).
2. A combine harvester according to claim 1
**characterized in that**
the transfer elements (11) are of a toothed configuration at least in a region-wise manner at their ends (13) which are towards the threshing and separating arrangement (9).
3. A combine harvester according to claims 1 and 2
**characterised in that**
the transfer guide plate member (24) is connected in a transition-free manner to the housing (8) and is joined thereto.
4. A combine harvester according to claims 1 to 3
**characterised in that**
the transfer guide plate member (24) is perforated in its discharge end region downstream of the guide slots (25) as viewed in the direction of flow.
5. A combine harvester according to claims 1 to 4
**characterised in that**
the plate members (12) are connected together by a holder (14) which can be screwed to a walker (4).
6. A combine harvester according to claims 1 to 5
**characterised in that**
the dimension of the plate members (12) substantially exceeds the structural height of the associated walker (4) in a downward direction.

4

7. A combine harvester according to claims 1 to 6
**characterised in that**
the plate members (12) have through bores (16) for the purposes of fixing same to the walker (4), the bores aligning with bores or holes (22, 30) provided on the walker (4).

8. A combine harvester according to claims 1 to 7
**characterised in that**
associated with the transfer element (11) is a feed drum (31) which is disposed above the discharge end of the walkers (4) and which is mounted upstream of the threshing and separating arrangement (9) (Figure 3).

## Revendications

1. Moissonneuse-batteuse constituée par un train de roulement, un carter (1), un organe de battage fonctionnement en flux tangentiel, formé par un tambour de battage (2) et un contre-batteur (3), et comprenant en outre des secoueurs de paille (4) se raccordant à l'organe de battage, avec un plateau de retour en arrière (5) et un dispositif de tamisage (6) disposés au-dessous, un dispositif de battage et de séparation (9) monté dans le carter de la moissonneuse-batteuse (1), connu en soi, fonctionnant en flux axial et constitué par un rotor (7) et un carter (8) étant monté à la suite des secoueurs de paille (4),
**caractérisée en ce qu'**
un élément de transfert (11) est relié fermement à l'extrémité située du côté sortie de chaque secoueur de paille (4) dans le but de transmettre le produit de la récolte depuis les secoueurs de paille (4) vers le dispositif de battage et de séparation (9), un élément de guidage (24) étant associé à chaque élément de transfert (11), et en ce que chaque élément de transfert (11) est constitué par plusieurs tôles (12) parallèles et espacées les unes des autres, qui sont continuellement guidées dans la région de leurs extrémités qui est tournée vers le sol dans des fentes (25) prévues dans l'élément de guidage (11).

2. Moissonneuse-batteuse selon la revendication 1,
**caractérisée en ce que**
les éléments de transfert (11) comprennent des dents, au moins partiellement, sur leurs côtés frontaux (13) qui sont tournés vers le dispositif de battage et de séparation (9).

3. Moissonneuse-batteuse selon les revendications 1 et 2,
**caractérisée en ce que**
la plaque de guidage (24) est raccordée directement au carter (8) et est fixée à celui-ci.

4. Moissonneuse-batteuse selon les revendications 1 à 3,
**caractérisée en ce que**
la plaque de guidage (24) comprend des trous à l'arrière des fentes de guidage (25) dans sa région située du côté sortie, vue en direction du flux.

5. Moissonneuse-batteuse selon les revendications 1 à 4,
**caractérisée en ce que**
les tôles (12) sont reliées les unes aux autres par un support (14) pouvant être boulonné à un secoueur (4).

6. Moissonneuse-batteuse selon les revendications 1 à 5,
**caractérisée en ce que**
les tôles (12) dépassent sensiblement vers le bas la hauteur du secoueur associé (4).

7. Moissonneuse-batteuse selon les revendications 1 à 6,
**caractérisée en ce que**
les tôles (12) comprennent en vue de leur fixation sur le secoueur (4) des alésages traversants (16, 29) qui sont amenés en alignement avec des perforations ou des trous (22, 30) prévus dans le secoueur (4).

8. Moissonneuse-batteuse selon les revendications 1 à 7,
**caractérisée en ce qu'**
un tambour d'alimentation (31) prévu au-dessus de l'extrémité située du côté sortie des secoueurs (4) et monté à l'avant du dispositif de battage et de séparation (9) est associé à l'élément de transfert (11). (Figure 3)

Fig.1

Fig.2

Fig. 3

Fig. 4

Fig.5